(19) **Europäisches Patentamt European Patent Office Office européen des brevets**

(11) **EP 4 453 862 B1**

(12) **EUROPEAN PATENT SPECIFICATION**

(45) Date of publication and mention of the grant of the patent:
**14.01.2026 Bulletin 2026/03**

(21) Application number: **22844275.2**

(22) Date of filing: **19.12.2022**

(51) International Patent Classification (IPC):
*G06T 7/00* (2017.01)   *G06T 7/90* (2017.01)
*G06T 7/277* (2017.01)   *G06T 7/246* (2017.01)
*A61K 9/28* (2006.01)   *A61J 3/00* (2006.01)

(52) Cooperative Patent Classification (CPC):
**G06T 7/0004; A61J 3/005; G06T 7/001;**
**G06T 7/246; G06T 7/277; G06T 7/90;**
G06T 2207/10024

(86) International application number:
**PCT/IB2022/062466**

(87) International publication number:
**WO 2023/119117 (29.06.2023 Gazette 2023/26)**

(54) **SYSTEM AND METHOD FOR ANALYSING THE COATING OF TABLETS**

SYSTEM UND VERFAHREN ZUR ANALYSE DER BESCHICHTUNG VON TABLETTEN

SYSTÈME ET PROCÉDÉ D'ANALYSE DU REVÊTEMENT DE COMPRIMÉS

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**

(30) Priority: **20.12.2021 IT 202100031748**

(43) Date of publication of application:
**30.10.2024 Bulletin 2024/44**

(73) Proprietor: **I.M.A. Industria Macchine**
**Automatiche S.p.A.**
**40064 Ozzano dell'Emilia (BO) (IT)**

(72) Inventors:
• **FERRI, Alessandro**
**40064 Ozzano dell'Emilia (IT)**
• **MINARDI, Marco**
**40064 Ozzano dell'Emilia (IT)**
• **EMILIANI, Giuliano**
**40064 Ozzano dell'Emilia (IT)**

(74) Representative: **Cicconetti, Andrea**
**Accapi S.r.l.**
**Via de' Griffoni, 10/A**
**40123 Bologna (IT)**

(56) References cited:
**GB-A- 2 486 939**

• **MAC ARTURO MURILLO ET AL: "Color evolution during a coating process of pharmaceutical tablet cores by random spraying", COLOR RESEARCH & APPLICATION, JOHN WILEY & SONS, INC, US, vol. 44, no. 2, 28 November 2018 (2018-11-28), pages 160 - 167, XP071625727, ISSN: 0361-2317, DOI: 10.1002/COL.22332**
• **PODREKAR GREGOR ET AL: "Automated visual inspection of pharmaceutical tablets in heavily cluttered dynamic environments", 2015 14TH IAPR INTERNATIONAL CONFERENCE ON MACHINE VISION APPLICATIONS (MVA), MVA ORGANIZATION, 18 May 2015 (2015-05-18), pages 206 - 209, XP033173110, DOI: 10.1109/ MVA.2015.7153168**

**Description**

The present invention concerns machines and methods for coating tablets, pills, capsules for pharmaceutical and food use, and in particular it refers to a system which can be associated with a coater machine for tablets to automatically analyse the quality of the coating applied on the tablets. The invention further concerns a method for analysing the coating of tablets in a coater machine for tablets.

In the pharmaceutical and food industry the use of machines and processes is known for applying a coating to the external surface of tablets, pills, capsules or similar, for example to protect them from stomach acids, to protect the stomach mucosa from aggressive drugs contained in the tablets, to allow for delayed release of the drug by regulating the rate at which the tablet is dissolved, to maintain the shape of the tablet or pill.

Known coater machines typically comprise a rotating drum inside which a controlled atmosphere is maintained and into which the tablets to be treated are introduced. Inside the rotating drum there are dispensers, such as sprayers or nebulizers, which dispense the substance, generally in liquid form, which, by depositing on the external surface of the tablets and once dried, forms the coating. The rotating drum is equipped with angular blades or baffles and is crossed by an air flow such that during its rotation about a horizontal axis the tablets are moved and mixed, in particular lifted and rotated towards the centre of the rotating drum so that they progressively and uniformly receive the coating substance dispensed by the sprayers.

The coating applied to the external surface of each tablet is dried by introducing heated air into the rotating drum, regulating both its flow and temperature so that the drying process takes place in a controlled manner.

So-called batch coating systems are known which involve the introduction of a certain amount of tablets (batch) inside the rotating drum of the machine and the subsequent extraction of that amount of tablets once the coating process is completed.

Also known are the so-called continuous flow coating systems in which a constant (mass) flow rate of tablets is introduced into a first end of the drum of the machine, the tablets longitudinally passing through the rotating drum during its rotation and continuously extracted from a second opposite end of the drum after being coated.

In both types of coating systems, the need to check the quality of the coating is known in order to optimally adjust the process parameters, for example the average residence time of the tablets inside the rotating drum, the amount of coating substance dispensed in the unit of time, the rotation speed of the drum, etc.

The publications "Color evolution during a coating process of pharmaceutical tablet cores by random spraying" by M. A. Murillo et al., in Color Research & Application, vol. 44, no. 2, 28 November 2018, pages 160-167, and "Automated visual inspection of pharmaceutical tablets in heavily cluttered dynamic environments" by G. Podrekar et al., in Proceedings of the 14th IAPR International Conference on Machine Vision Applications, 18 May 2015, pages 206-209, provide relevant prior art.

Coating analysis systems are known which provide for periodically taking a sample of coated tablets which are examined by analysing the colour of the external surface by means of special measuring instruments, such as colourimeters, spectrophotometers, colour spectrometers. The measurement of the discrepancy between the detected colour and the colour of a reference standard tablet provides an indication on the quality of the coating.

Systems are also used which evaluate the quality of the coating on the basis of the change in the weight of the tablet sample.

These analysis systems are, however, laborious because they require manually taking samples of tablets from the rotating drums and also allow a very low statistical quality control of the production, since only a very small number of coated tablets can be taken and analysed.

An object of the present invention is to improve the known systems for analysing the coating of tablets associated with coater machines, in particular continuous flow coater machines of tablets, pills, capsules and similar.

Another object is to provide a simple and inexpensive system that allows automatically, without the intervention of an operator, to analyse a large number of tablets taken from a continuous flow coater machine.

A further object is to realize a system that allows to precisely and accurately evaluate the quality of the coating and in particular an internal variability index and an external variability index of the coating of the tablets processed by the coater machine.

In a first aspect of the invention a system for analysing the coating of tablets according to claim 1 is provided.

In a second aspect of the invention a method for analysing the coating of tablets according to claim 7 is provided.

The invention can be better understood and implemented with reference to the attached drawings which illustrate an exemplary and non-limiting embodiment thereof, in which:

- figure 1 is a schematic partial section front view of a machine for coating tablets to which the system for analysing the coating of the tablets of the invention is associated;
- figure 2 is a section along line II-II of figure 1 which illustrates in particular the system of the invention associated with an outlet chute of the tablets;

- figure 3 is a section view of a dome illuminator and vision means of the system of the invention;
- figure 4 is a partial enlarged view of the outlet chute of the tablets that shows a plurality of tablets of different shape and arranged with different lying;
- figures 5a and 5b show two elongated tablets having a low and a high internal variability index, respectively;
- figures 6a and 6b show a group of elongated tablets having respectively low and high external variability index.

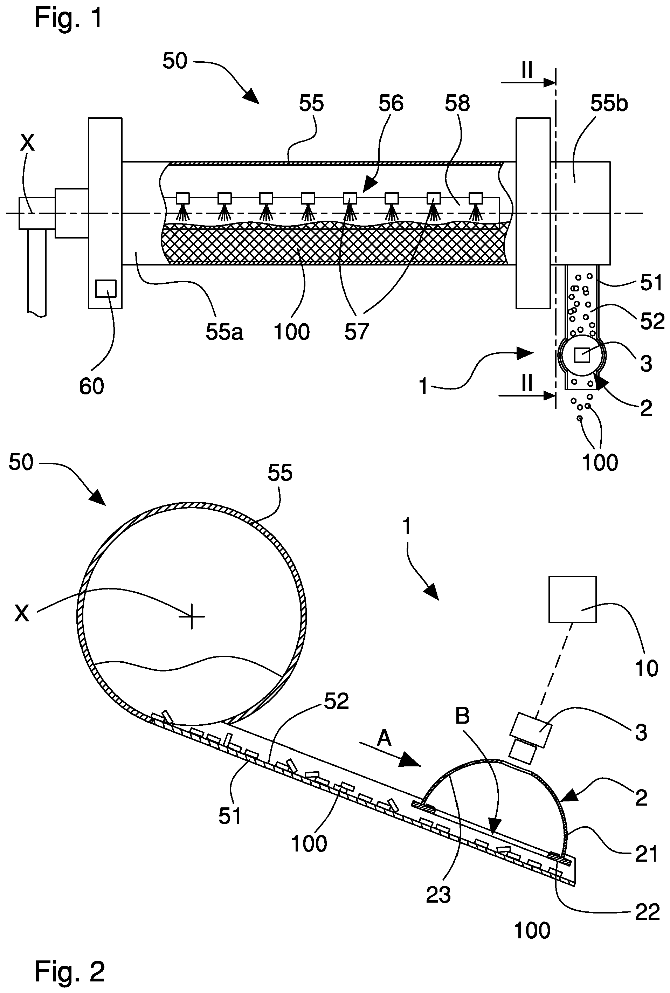

With reference to figures 1 to 4, the system 1 of the invention for analysing the coating of tablets, pills, capsules or similar for pharmaceutical and/or food use associated with a coater machine 50 for tablets is schematically illustrated.

The coater machine 50, for example, is a continuous flow machine of known type comprising a rotating drum 55 which is elongated longitudinally and rotatable about an rotation axis X, in particular horizontal, provided at a first end 55a with a first opening, not illustrated, for loading the tablets 100 to be coated and at an opposite second end 55b provided with a second opening connected to an outlet chute 51 of the system 1 of the invention for the coated tablets.

Inside the rotating drum 55 there are dispensing means 56 arranged to dispense a substance, for example in liquid form, which by depositing on the external surface of the tablets 100 forms the coating. The dispensing means 56 comprise, for example, a plurality of sprayers 57 fixed to a supply duct 58 for feeding the coating substance.

The system 1 for analysing the coating of the tablets comprises in addition to the outlet chute 51, a dome illuminator 2 arranged to illuminate a detection zone B of a descent plane 52 of the outlet chute 51 on which the tablets 100 descend by gravity along an exit direction A. The system further comprises vision means 3 associated with the dome illuminator 2 and arranged to detect images of the tablets 100 in the detection zone B and a control unit 10, connected to the vision means 3 to receive the images of tablets 100. The control unit 10 is configured to track the motion of each tablet 100 and analyse only the images of selected tablets without shadows, in particular single and separate tablets which expose to vision means 3 their maximum extension surface, and for evaluating a colour uniformity of external surfaces of said selected tablets.

In particular, the control unit 10 implements a tracking algorithm that provides the following procedure.

Considering a q-th image captured by the vision system 3 of the tablets moving on the outlet chute, each tablet 100 present within said image is firstly identified. Subsequently, a prediction is made on the position where the tablet will be within the image $q+1$, based on its position in the $q$-th image, based on physical considerations and the use of a Kalman filter (R. E. Kalman. "A New Approach to Linear Filtering and Prediction Problems". Journal of Basic Engineering, 1960, 82.1: 35-45). Finally, after identifying each tablet 100 present within the image $q+1$ captured by the vision means 3, the Jaccard distance concept (P. Jaccard. "The distribution of the flora in the alpine zone". New phytologist, 1912, 11.2: 37-50) and the Hungarian algorithm are used (H. W. Kuhn. "The Hungarian method for the assignment problem". Naval Research Logistics Quarterly, 1955, 2.1-2: 83-97) to make the association between the new position of each tablet 100 in the image $q+1$ and its prediction deriving from the analysis of the $q$-th image.

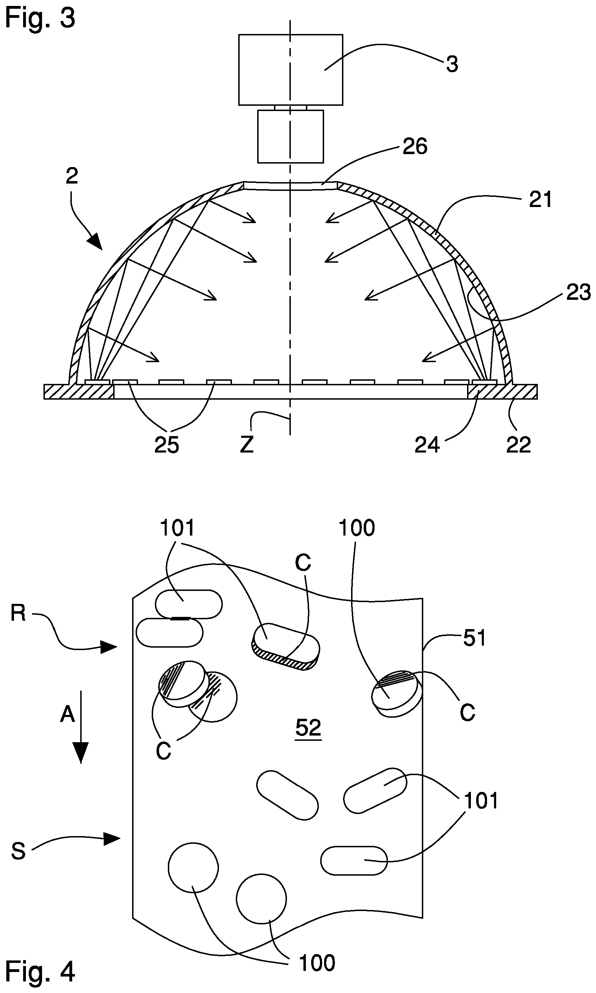

The control unit 10 by tracking the motion of each tablet is capable to distinguish said tablet in each image captured by the vision system 3 and analyse it separately if it is without shadows. In other words, with particular reference to figure 4, the control unit 10 is configured to discard and not evaluate the colour uniformity of external surfaces of the tablets having shadows or shadow zones C. i.e. areas of the external surfaces that are not correctly and completely illuminated by the light emitted by the dome illuminator 2, for example because they are superimposed or in contact or inclined.

More precisely, in order to evaluate whether a tablet 100, 101 is correctly and completely illuminated by the light emitted by the dome illuminator 2 and has no shadow zones and is therefore suitable for the analysis of colour uniformity, three criteria are used, which can be used both individually and in combination. For example, one can choose to analyse a tablet only if the conditions that meet all three of the criteria are fulfilled therefor or the conditions for at least one of those criteria.

The first criterion is based on the evaluation of the aspect ratio of the considered tablet, that is defined as the ratio between the length and the width of the relative oriented closing rectangle (J. O'Rourke. "Finding minimal enclosing boxes". International journal of computer & information sciences, 1985, 14.3: 183-199). In particular, the colour of the tablet is analysed if the aspect ratio does not deviate excessively (it is possible for the operator to define a tolerance threshold) from the value obtained by carrying out the ratio between the theoretical actual dimensions corresponding to the type of tablet considered (round or circular 100 or elongated 101).

The second criterion, instead, provides that the operator provides the control unit 10 with a model image (template) of a tablet of the considered type (round or circular 100 or elongated 101), photographed in an ideal pose, whose external contour is identified thanks to the Canny algorithm (J. Canny. "A Computational Approach To Edge Detection", IEEE Transactions on Pattern Analysis and Machine Intelligence, 1986, 8.6: 679-698). Subsequently, the external contour of the tablet is also detected, wherein the colour analysability of the tablet is evaluated and its dissimilarity with respect to that of the model tablet is calculated. If this index is below a tolerance threshold specified by the operator, the colour of the tablet in question will be analysed.

The third criterion is based on the identification of edges present in the internal part of the image of the tablet of which the analysability of the colour has to be evaluated, said edges being identified too by means of the aforementioned Canny algorithm. In particular, should the number of pixels belonging to these edges be lower than a tolerance threshold specified by the operator, the colour of the tablet will be analysed.

In figure 4, by way of example, tablets with shadows are grouped and indicated by reference R and comprise round or circular tablets 100 and elongated tablets 101. In this way, the control unit 10 actually selects and evaluates the colour uniformity only of the single and separate tablets and which expose to vision means 3 their maximum extension surface, i.e. the tablets resting on the descent plane 52 with the opposite maximum extension surface. In figure 4 these selected tablets are grouped and indicated by reference S and comprise round or circular tablets 100 and oblong tablets 101. In this way, the vision means 3 are able to detect optimally a complete and illuminated image of the external surface of the tablet 100 on which to perform the colour uniformity analysis.

More precisely, the control unit 10 is configured to measure an internal variability index and an external variability index of a colour of the tablets.

For the definition of these indexes, a group is considered that is composed of a number equal to $N$ of tablets 100, 101 belonging to those selected without shadows, and in particular the image of each of them captured by the vision system 3.

Defining $M_j$ as the number of pixels belonging to the image of the $j$-th tablet, and ( $x_k^j, y_k^j$ ) the coordinates of $k$-th pixel in the two-dimensional plane of the image of the $j$-th tablet, and ( $L_{xy_k}^j, a_{xy_k}^j, b_{xy_k}^j$ ) as the value corresponding to the colour of the $k$-th pixel having coordinates ( $x_k^j, y_k^j$ ) in the CIELAB colour space, the mean colour of the tablet is defined by the triple $(\overline{L}_j, \overline{a}_j, \overline{b}_j)$, where each element is calculated according to the respective formula:

$$\overline{L}_j = \frac{1}{M_j}\sum_{k=1}^{M_j} L_{xy_k}^j \; ; \overline{a}_j = \frac{1}{M_j}\sum_{k=1}^{M_j} a_{xy_k}^j \; ; \overline{b}_j = \frac{1}{M_j}\sum_{k=1}^{M_j} b_{xy_k}^j \quad [\text{eq. 1}]$$

Being known the formulation of the CIEDE2000 standard index, indicated as $\Delta E_{2000}$, ("Improvement to industrial colour-difference evaluation", Wien: CIE Publication No. 142-2001, Central Bureau of the CIE; 2001) which indicates a metric Euclidean distance (difference) between two colours in the CIELAB colour space, for the image of the $j$-th tablet it is possible to define the vector of the colour inner distances $\overrightarrow{\Delta E}_{2000_j}^{int}$, for which the $k$-th element $\overrightarrow{\Delta E}_{2000_{j_k}}^{int}$ can be calculated as the value of the $\Delta E_{2000}$ between the colour ( $L_{xy_k}^j, a_{xy_k}^j, b_{xy_k}^j$ ) of the k-th pixel having coordinates ( $x_k^j, y_k^j$ ) and mean colour $(\overline{L}_j, \overline{a}_j, \overline{b}_j)$ of the $j$-th tablet.

The mean inner distance $\overline{\Delta E}_{2000_j}^{int}$ associated with the $j$-th tablet can then be defined as the mean value of its vector of the inner distances $\overrightarrow{\Delta E}_{2000_j}^{int}$, i.e.:

$$\overline{\Delta E}_{2000_j}^{int} = \frac{1}{M_j}\sum_{k=1}^{M_j} \overrightarrow{\Delta E}_{2000_{j_k}}^{int} \quad [\text{eq. 2}]$$

In this way, it is possible to define the internal variability index for the considered group of $N$ tablets of type 100 and 101 belonging to those selected without shadows, according to the respective formula:

$$\overline{\overline{\Delta E}}_{2000}^{int} = \frac{1}{N}\sum_{j=1}^{N} \overline{\Delta E}_{2000_j}^{int} \quad [\text{eq. 3}]$$

More precisely, the internal variability index evaluates the colour homogeneity on the surface of each tablet taken individually.

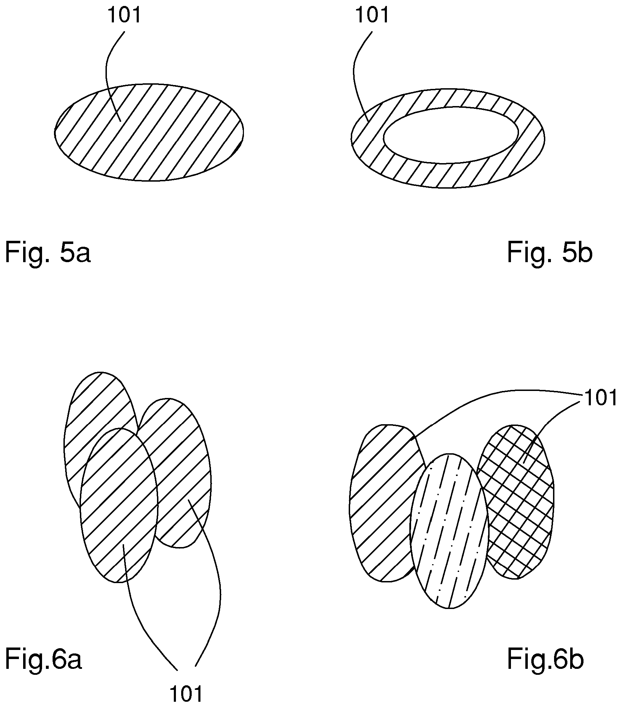

For example, with particular reference to figures 5a and 5b, a low internal variability index indicates a high homogeneity or uniformity of the colour of the surface of a single tablet, i.e. the absence of areas or zones on this surface where there is no colour and/or it has different intensity (fig. 5a). Conversely, a high internal variability index indicates a low homogeneity or uniformity of the colour of the surface of the single tablet, i.e. the presence on the surface of one or more areas or zones where there is no colour and/or it has different intensity (fig. 5b). In particular in figure 5a the colour is distributed with a substantially uniform intensity, hence a type of hatch, while in figure 5b a portion of the tablet does not have any hatch as there is no colour therein.

In addition, the mean colour of the considered group of N tablets of type 100 and 101 belonging to those selected without shadows can be considered and indicated with the triple ( $\overline{\overline{L}}, \overline{\overline{a}}, \overline{\overline{b}}$ ), wherein each element is calculated as follows:

$$\overline{\overline{L}} = \frac{1}{N} \sum_{j=1}^{N} \overline{L}_j \; ; \overline{\overline{a}} = \frac{1}{N} \sum_{j=1}^{N} \overline{a}_j \; ; \overline{\overline{b}} = \frac{1}{N} \sum_{j=1}^{N} \overline{b}_j \quad [\text{eq. 4}]$$

wherein ($\overline{L}_j, \overline{a}_j, \overline{b}_j$) represents the mean colour of the $j$-th tablet of the group.

It is therefore possible to define for the considered group of N tablets of type 100 and 101 belonging to those selected without shadows the vector of external distances $\overrightarrow{\Delta E_{2000}^{ext}}$, for which the $j$-th element $\overrightarrow{\Delta E_{2000}^{ext}}_j$ can be calculated as the value of the $\Delta E_{2000}$ between the mean colour ($\overline{L}_j, \overline{a}_j, \overline{b}_j$) of the $j$-th tablet of the group and the mean colour ( $\overline{\overline{L}}, \overline{\overline{a}}, \overline{\overline{b}}$ ) of the group.

In this way, the external variability index for the considered group of N tablets of type 100 and 101 belonging to those selected without shadows can be defined as the mean of the values contained in the vector of the external distances $\overrightarrow{\Delta E_{2000}^{ext}}$, according to the respective formula:

$$\overline{\overline{\Delta E}}_{2000}^{ext} = \frac{1}{N} \sum_{j=1}^{N} \overrightarrow{\Delta E_{2000}^{ext}}_j \qquad [\text{eq. 5}]$$

More precisely, the external variability index evaluates the colour diversity among a plurality of tablets.

For example, with particular reference to figures 6a and 6b, a low external variability index indicates a reduced colour diversity among the surfaces of a group of tablets, i.e. a high homogeneity or uniformity of the colour of said surfaces (figure 6a). Conversely, a high external variability index indicates a marked colour diversity among the surfaces of a group of tablets, i.e. a low homogeneity or uniformity of the colour of the aforementioned surfaces (fig. 6b). In particular in figure 6a the tablets all have the same hatch as the colour is distributed on the tablets substantially uniformly, while in figure 6b the tablets have each different colour and therefore the respective hatches are different.

Based on the above definitions, the internal variability index $\overline{\overline{\Delta E}}_{2000}^{int}$ thus indicates the colour variability of the external surface of a same tablet 100, while the external variable index $\overline{\overline{\Delta E}}_{2000}^{ext}$ indicates the colour variability of the external surfaces of a plurality of tablets 100.

Generally, the threshold value of the variability indexes below which the differences of colours are considered negligible is equal to 3.

This threshold value is derived experimentally.

Alternatively, it is possible to use the vision system 3 to analyse tablets 100 belonging to a production batch considered as a standard, i.e. a reference batch, and calculate the relative internal and external variability indexes considered as reference and subsequently compare these reference indexes with those obtained for other tablets for which a coating quality control is to be carried out.

Another alternative comprises analysing the temporal evolution of the variability indexes obtained for the selected and analysed tablets 100 and, on the basis of unexpected variations of these variability indexes, detecting a possible deterioration in the performance of the coating process performed by the coater machine 50.

The vision means 3 comprise, for example, a camera.

With particular reference to figure 3, the dome illuminator 2 comprises a domed vault 21, in particular having a circular base 22, provided with an internal reflecting surface 23 and a peripheral internal flange 24. The latter is provided at the base 22 and includes a plurality of light sources 25, in particular of LED type, suitable for diffusing light towards the internal reflecting surface 23 which in turn provides for diffusing the light uniformly downwards, i.e. towards the base 22. The dome vault 21 comprises an upper central opening 26, for example coaxial to a vertical axis of symmetry Z of the dome vault 21, which allows the vision means 3 to detect images of said tablets 100 inside the dome illuminator 2 in the detection zone B of the outlet chute 51.

The operation of the system 1 according to the invention for analysing the coating of tablets, pills, capsules or similar for pharmaceutical and/or food use made by a coater machine 50 provides that the tablets 100 coated and exiting the coater machine 50 are analysed by the vision means 3 and by the control unit 10 while sliding by gravity on the outlet chute 51 along the exit direction A.

More precisely, the tablets 100 are illuminated at the detection zone B of the descent plane 52 of the outlet chute 51 by the dome illuminator 2 configured to emit and diffuse light uniformly and homogeneously.

Thanks to this illumination, the images of the tablets 100 detected by the vision means 3 are selected by the control unit 10 which analyses the external surface only of the selected tablets without shadows, i.e. of the single and separate tablets which expose to vision means 3 their maximum extension surface. The external surfaces of the selected tablets are thus analysed in order to evaluate a colour uniformity and in particular to measure the internal variability index $\overline{\overline{\Delta E}}_{2000}^{int}$ and the external variability index $\overline{\overline{\Delta E}}_{2000}^{ext}$ .

Based on the results of this analysis, it is possible to modify the operating parameters of the coater machine 50, in particular if the values of the measured variability indexes deviate from the reference variability indexes.

For this purpose, the coater machine 50 comprises a processing unit 60 connected to the control unit 10 of the system 1 and arranged to vary operating parameters based on information provided by the control unit 10 concerning the colour uniformity of external surfaces of the selected coated tablets. In particular, the operating parameters comprise an inlet flow rate of the tablets, a rotation speed of the rotating drum 55, a flow rate of the coating substance delivered by the sprayers 57 onto the tablets.

The method of the invention for analysing the coating of tablets, pills, capsules or similar for pharmaceutical and/or food use in a coater machine for tablets 50 equipped with an outlet chute 51 for the release of the coated tablets 100, comprises the steps of:

-   illuminating with a dome illuminator 2 a detection zone B of a descent plane 52 of the outlet chute 51 on which the tablets 100 descend by gravity along an exit direction A;
-   detecting by means of vision means 3 associated with the dome illuminator 2 images of the tablets 100 moving on the descent plane 52;
-   analysing by means of a control unit 10, connected to the vision means 3 to receive images of the tablets 100, only the images of selected tablets without shadows;
-   evaluating a colour uniformity of external surfaces of the selected tablets.

According to the method of the invention the selected tablets without shadows comprise single and isolated tablets, which expose to vision means 3 their maximum extension surface. The method comprises detecting the images of the tablets 100 by vision means 3 comprising for example a camera.

According to the method evaluating the colour uniformity of external surfaces of the selected tablets comprises measuring an internal variability index of a colour of the selected tablets 100 according to the formula:

$$\overline{\overline{\Delta E}}_{2000}^{int} = \frac{1}{N} \sum_{j=1}^{N} \overline{\Delta E}_{2000\,j}^{int} \qquad [\text{eq. 3}]$$

wherein:

$\overline{\Delta E}_{2000\,j}^{int}$ is the mean inner colour distance associated with the j-th tablet in the CIELAB colour space;

and an external variability index of a colour of the selected tablets 100 according to the formula:

$$\overline{\overline{\Delta E}}_{2000}^{ext} = \frac{1}{N} \sum_{j=1}^{N} \overline{\vec{\Delta E}}_{2000\,j}^{ext} \qquad [\text{eq. 5}]$$

wherein:

$\vec{\Delta E}_{2000}^{ext}$ is the vector of the external colour distances associated with the *j*-th tablet in the CIELAB colour space.

The system and the method of the invention thus allow a large number of tablets 100 to be analysed in a simple and economical way, and automatically without intervention by an operator, at the outlet from a coater machine 50, in particular a coater machine of the continuous flow type.

Thanks to the vision means 3 and the dome illuminator 2 associated with the outlet chute 51 of the coater machine 50 it is in fact possible to analyse the tablets 100 in motion, i.e. while they descend by gravity along the exit direction A on the descent plane 52 of the outlet chute 51.

The system 1 of the invention allows to precisely, accurately and reliably evaluate the quality of the coating of the tablets 100 and in particular an internal variability index $\overline{\overline{\Delta E}}_{2000}^{int}$ and an external variability index $\overline{\overline{\Delta E}}_{2000}^{ext}$ of the coating of the tablets 100 processed by the coater machine 50, since the control unit 10 analyses only the images of the tablets 100 detected by the vision means 3 which are without shadows, i.e. the images of the single and separate tablets and which expose to vision means 3 their maximum extension surface. In this way, it is avoided that the control unit 10 analyses the images in which the external surface of the tablet 100 is partial and/or has shadows, this negatively influencing the measurement of the internal and external variability indexes of the colour, for example by judging out of tolerance and unacceptable a tablet that if correctly arranged and illuminated would instead be acceptable.

**Claims**

1. System (1) for analysing coating of tablets, pills, capsules or similar for pharmaceutical and/or food use, which can be associated with a coater machine (50) for tablets, said system (1) comprising:

   - an outlet chute (51) configured to be associated with said coater machine (50) for the release of coated tablets (100, 101);
   - a dome illuminator (2) arranged to illuminate a detection zone (B) of a descent plane (52) of said outlet chute (51) on which said tablets (100, 101) descend by gravity along an exit direction (A);
   - vision means (3) associated with said dome illuminator (2) and arranged to detect images of said tablets (100, 101) moving on said descent plane (52);
   - a control unit (10) connected at least to said vision means (3) to receive images of said tablets (100, 101) and configured to track a motion of each tablet (100, 101) and analyse only the images of selected tablets without shadows, in particular single and separate tablets which expose to vision means (3) their maximum extension surface, and for evaluating a colour uniformity of external surfaces of said selected tablets.

2. System (1) according to claim 1, wherein said vision means (3) comprise a camera.

3. System (1) according to claim 1 or 2, wherein said dome illuminator (2) comprises a dome vault (21) having a base (22), in particular circular, and provided with an internal reflecting surface (23) and a peripheral internal flange (24) that is positioned at said base (22) and is provided with a plurality of light sources (25), in particular of LED type, suitable for diffusing light towards said internal reflecting surface (23), said dome vault (21) comprising an upper central opening (26) to allow said vision means (3) to detect images of said tablets (100, 101) inside said dome illuminator (2).

4. System (1) according to any preceding claim, wherein said control unit (10) is configured to measure an internal variability index of a colour of N selected tablets (100,

   101) according to the formula:

   $$\overline{\overline{\Delta E}}_{2000}^{int} = \frac{1}{N} \sum_{j=1}^{N} \overline{\Delta E}_{2000\,j}^{int} \quad [\text{eq. } 3]$$

   wherein:

   $\overline{\Delta E}_{2000\,j}^{int}$ is the mean inner colour distance associated with the *j-th* tablet in CIELAB colour space, said internal variability index evaluating the colour homogeneity on the surface of each tablet taken individually; and an external variability index of a colour of said selected tablets (100, 101) according to the formula

   $$\overline{\overline{\Delta E}}_{2000}^{ext} = \frac{1}{N} \sum_{j=1}^{N} \overline{\Delta E}_{2000\,j}^{ext} \quad [\text{eq. } 5]$$

   wherein:

   $\overrightarrow{\Delta E}_{2000}^{ext}$ is the vector of the colour external distances associated with the *j-th* tablet in CIELAB colour space, said external variability index evaluating the colour diversity among a plurality of tablets.

5. Continuous coater machine (50) for coating tablets, provided with a system (1) for analysing the coating of tablets (100, 101) according to any preceding claim.

6. Continuous coater machine (50) according to claim 5, comprising a processing unit (60) connected to the control unit (10) of said system (1) and arranged to vary operating parameters of processing of said coater machine (50) based on information provided by said control unit (10) concerning a colour uniformity of external surfaces of the coated tablets.

7. Method for analysing coating of tablets, pills, capsules or similar for pharmaceutical and/or food use processed by a coating machine (50) for tablets equipped with an outlet chute (51)
for the release of coated tablets (100, 101), comprising:

- illuminating with a dome illuminator (2) a detection zone (B) of a descent plane (52) of said outlet chute (51) on which said tablet (100, 101) descend by gravity along an exit direction (A);
- detecting, by means of vision means (3) associated with said dome illuminator (2), images of said tablets (100, 101) moving along said descent plane (52);
- by means of a control unit (10), connected to said vision means (3) in order to receive images of said tablets (100, 101), tracking a motion of said tablets (100, 101) and analysing only the images of selected tablets without shadows;
- evaluating a colour uniformity of external surfaces of said selected tablets.

8. Method according to claim 7, wherein said selected tablets without shadows comprise single and separate tablets which expose a maximum extension surface thereof to vision means (3).

9. Method according to claim 7 or 8, comprising detecting said images of said tablets (100, 101) by vision means (3) comprising a camera.

10. Method according to any of claims 7 to 9, wherein said evaluating said colour uniformity of an external surface of said selected tablets (100, 101) comprises measuring an internal variability index of a colour of N selected tablets (100, 101) according to the formula:

$$\overline{\overline{\Delta E}}_{2000}^{int} = \frac{1}{N} \sum_{j=1}^{N} \overline{\Delta E}_{2000j}^{int} \qquad [\text{eq. } 3]$$

wherein:

$\overline{\Delta E}_{2000j}^{int}$ is the mean inner colour distance associated with the *j-th* tablet in CIELAB colour space, said internal variability index evaluating the colour homogeneity on the surface of each tablet taken individually;
and an external variability index of a colour of said selected tablets (100, 101) according to the respective formula

$$\overline{\overline{\Delta E}}_{2000}^{ext} = \frac{1}{N} \sum_{j=1}^{N} \overrightarrow{\Delta E}_{2000j}^{ext} \qquad [\text{eq. } 5]$$

wherein:

$\overrightarrow{\Delta E}_{2000}^{ext}$ is the vector of the external colour distances associated with the *j-th* tablet in CIELAB colour space, said external variability index evaluating the colour diversity among a plurality of tablets.

**Patentansprüche**

1. System (1) zum Analysieren der Beschichtung von Tabletten, Pillen, Kapseln oder ähnlichem für pharmazeutische und/oder Lebensmittelzwecke, das einer Beschichtungsmaschine (50) für Tabletten zugeordnet werden kann, wobei das System (1) aufweist:

- eine Austrittsschütte (51), die ausgebildet ist, der Beschichtungsmaschine (50) zum Ausgeben von beschichteten Tabletten (100, 101) zugeordnet zu werden;
- eine Kuppelbeleuchtung (2), die angeordnet ist, einen Erfassungsbereich (B) einer Abwärtsebene (52) der Austrittsschütte (51) zu beleuchten, auf der die Tabletten (100, 101) durch die Schwerkraft entlang einer Ausgangsrichtung (A) abfallen;
- Bildaufnahmemittel (3), die der Kuppelbeleuchtung (2) zugeordnet sind und angeordnet sind, Bilder der sich auf der Abwärtsebene (52) bewegenden Tabletten (100, 101) zu erfassen;
- eine Steuereinheit (10), die zumindest mit den Bildaufnahmemittel (3) verbunden ist, um Bilder der Tabletten (100, 101) zu empfangen und die ausgebildet ist, eine Bewegung jeder Tablette (100, 101) zu verfolgen und nur die Bilder ausgewählter Tabletten ohne Schatten zu analysieren, insbesondere einzelner und separater Tabletten, die ihre maximale Ausdehnungsfläche den Bildaufnahmemitteln (3) aussetzen, und um eine Farbgleichmäßigkeit von Außenflächen der ausgewählten Tabletten zu bewerten.

2. System (1) nach Anspruch 1, wobei die Bildaufnahmemittel (3) eine Kamera aufweisen.

3. System (1) nach Anspruch 1 oder 2, wobei die Kuppelbeleuchtung (2) ein Kuppelgewölbe (21) mit einer insbesondere kreisförmigen Basis (22) aufweist, das mit einer inneren reflektierenden Oberfläche (23) und einem peripheren inneren Flansch (24) versehen ist, der an der Basis (22) positioniert ist, und mit einer Mehrzahl von Lichtquellen (25) versehen ist, insbesondere vom LED-Typ, die geeignet sind, Licht in Richtung der inneren reflektierenden Oberfläche (23) zu streuen, wobei das Kuppelgewölbe (21) eine obere zentrale Öffnung (26) aufweist, damit die Bildaufnahmemittel (3) Bilder der Tabletten (100, 101) innerhalb der Kuppelbeleuchtung (2) erfassen können.

4. System (1) nach einem der vorstehenden Ansprüche, wobei die Steuereinheit (10) ausgebildet ist, einen internen Variabilitätsindex einer Farbe von N ausgewählten Tabletten (100, 101) zu messen gemäß der Formel:

$$\overline{\overline{\Delta E}}_{2000}^{int} = \frac{1}{N} \sum_{j=1}^{N} \overline{\Delta E}_{2000\,j}^{int} \quad \text{[Gleichung 3]}$$

wobei:

$\overline{\Delta E}_{2000\,j}^{int}$ der mittlere innere Farbabstand ist, der der j-ten Tablette im CIELAB-Farbraum zugeordnet ist, wobei der interne Variabilitätsindex die Farbhomogenität auf der Oberfläche jeder einzelnen Tablette bewertet; und einen externen Variabilitätsindex einer Farbe der ausgewählten Tabletten (100, 101) gemäß der Formel

$$\overline{\overline{\Delta E}}_{2000}^{ext} = \frac{1}{N} \sum_{j=1}^{N} \overrightarrow{\Delta E}_{2000\,j}^{ext} \quad \text{[Gleichung 5]}$$

wobei:

$\overrightarrow{\Delta E}_{2000}^{ext}$ der Vektor der externen Farbabstände ist, der der j-ten Tablette im CIELAB-Farbraum zugeordnet ist, wobei der externe Variabilitätsindex die Farbvielfalt unter einer Mehrzahl von Tabletten bewertet.

5. Kontinuierliche Beschichtungsmaschine (50) zum Beschichten von Tabletten, die mit einem System (1) zum Analysieren der Beschichtung von Tabletten (100, 101) nach einem der vorstehenden Ansprüche versehen ist.

6. Kontinuierliche Beschichtungsmaschine (50) nach Anspruch 5, aufweisend eine Verarbeitungseinheit (60), die mit der Steuereinheit (10) des Systems (1) verbunden ist und angeordnet ist, Betriebsparameter der Verarbeitung der Beschichtungsmaschine (50) basierend auf Informationen zu variieren, die von der Steuereinheit (10) bezüglich einer Farbgleichmäßigkeit von Außenflächen der beschichteten Tabletten bereitgestellt werden.

7. Verfahren zum Analysieren der Beschichtung von Tabletten, Pillen, Kapseln oder ähnlichem für pharmazeutische und/oder Lebensmittelzwecke, verarbeitet von einer Beschichtungsmaschine (50) für Tabletten, die mit einer Austrittsschütte (51) zum Ausgeben von beschichteten Tabletten (100, 101) ausgestattet ist, aufweisend:

- Beleuchten eines Erfassungsbereichs (B) einer Abwärtsebene (52) der Austrittsschütte (51), auf der die Tabletten (100, 101) durch die Schwerkraft entlang einer Ausgangsrichtung (A) abfallen, mit einer Kuppelbeleuchtung (2);

- Erfassen von Bildern der sich entlang der Abwärtsebene (52) bewegenden Tabletten (100, 101) mittels der Kuppelbeleuchtung (2) zugeordneten Bildaufnahmemitteln (3);
- Verfolgen einer Bewegung der Tabletten (100, 101) und Analysieren nur der Bilder ausgewählter Tabletten ohne Schatten mittels einer Steuereinheit (10), die mit den Bildaufnahmemitteln (3) verbunden ist, um Bilder der Tabletten (100, 101) zu empfangen;
- Bewerten einer Farbgleichmäßigkeit von Außenflächen der ausgewählten Tabletten.

8. Verfahren nach Anspruch 7, wobei die ausgewählten Tabletten ohne Schatten einzelne und separate Tabletten aufweisen, die eine maximale Ausdehnungsfläche davon den Bildaufnahmemitteln (3) aussetzen.

9. Verfahren nach Anspruch 7 oder 8, aufweisend ein Erfassen der Bilder der Tabletten (100, 101) durch Bildaufnahmemittel (3), die eine Kamera aufweisen.

10. Verfahren nach einem der Ansprüche 7 bis 9, wobei das Bewerten der Farbgleichmäßigkeit einer Außenfläche der ausgewählten Tabletten (100, 101) ein Messen eines internen Variabilitätsindexes einer Farbe von N ausgewählten Tabletten (100, 101) gemäß der Formel aufweist:

$$\overline{\overline{\Delta E}}_{2000}^{int} = \frac{1}{N} \sum_{j=1}^{N} \overline{\Delta E}_{2000\,j}^{int} \qquad \text{[Gleichung 3]}$$

wobei:

$\overline{\Delta E}_{2000\,j}^{int}$ der mittlere innere Farbabstand ist, der der j-ten Tablette im CIELAB-Farbraum zugeordnet ist, wobei der interne Variabilitätsindex die Farbhomogenität auf der Oberfläche jeder einzelnen Tablette bewertet; und eines externen Variabilitätsindex einer Farbe der ausgewählten Tabletten (100, 101) gemäß der entsprechenden Formel

$$\overline{\overline{\Delta E}}_{2000}^{ext} = \frac{1}{N} \sum_{j=1}^{N} \overrightarrow{\Delta E}_{2000\,j}^{ext} \qquad \text{[Gleichung 5]}$$

wobei:

$\overrightarrow{\Delta E}_{2000}^{ext}$ der Vektor der externen Farbabstände ist, der der j-ten Tablette im CIELAB-Farbraum zugeordnet ist, wobei der externe Variabilitätsindex die Farbvielfalt unter einer Mehrzahl von Tabletten bewertet.

**Revendications**

1. Système (1) d'analyse d'enrobage de comprimés, pilules, gélules ou similaires pour une utilisation pharmaceutique et/ou alimentaire, qui peut être associé à une enrobeuse (50) pour comprimés, ledit système (1) comprenant :

- une goulotte de sortie (51) configurée pour être associée à ladite enrobeuse (50) pour la distribution de comprimés enrobés (100, 101) ;
- un éclairage en dôme (2) agencé pour éclairer une zone de détection (B) d'un plan descendant (52) de ladite goulotte de sortie (51) sur laquelle lesdits comprimés (100, 101) descendent par gravité le long d'une direction de sortie (A) ;
- des moyens de vision (3) associés audit éclairage en dôme (2) et agencés pour détecter des images desdits comprimés (100, 101) se déplaçant sur ledit plan descendant (52) ;
- une unité de commande (10) connectée au moins auxdits moyens de vision (3) pour recevoir des images desdits comprimés (100, 101) et configurée pour suivre un mouvement de chaque comprimé (100, 101) et analyser uniquement les images de comprimés sélectionnés sans ombres, en particulier des comprimés individuels et distincts qui exposent aux moyens de vision (3) leur surface d'extension maximale, et pour évaluer une uniformité de couleur de surfaces externes desdits comprimés sélectionnés.

2. Système (1) selon la revendication 1, dans lequel lesdits moyens de vision (3) comprennent une caméra.

3. Système (1) selon la revendication 1 ou 2, dans lequel ledit éclairage en dôme (2) comprend une voûte de dôme (21) ayant une base (22), en particulier circulaire, et est doté d'une surface réfléchissante interne (23) et d'une bride interne périphérique (24) qui est positionnée au niveau de ladite base (22) et est doté d'une pluralité de sources lumineuses (25), en particulier de type LED, adaptées pour diffuser de la lumière vers ladite surface réfléchissante interne (23), ladite voûte de dôme (21) comprenant une ouverture centrale supérieure (26) pour permettre auxdits moyens de vision (3) de détecter des images desdits comprimés (100, 101) à l'intérieur dudit éclairage en dôme (2).

4. Système (1) selon l'une quelconque des revendications précédentes, dans lequel ladite unité de commande (10) est configurée pour mesurer un indice de variabilité interne d'une couleur de N comprimés (100, 101) sélectionnés selon la formule :

$$\overline{\overline{\Delta E}}_{2000}^{int} = \frac{1}{N} \Sigma_{j=1}^{N} \overline{\Delta E}_{2000j}^{int} \ [\text{éq. 3}]$$

où :

$\overline{\Delta E}_{2000j}^{int}$ est la distance moyenne de couleur interne associée au *j-ème* comprimé dans l'espace colorimétrique CIELAB, ledit indice de variabilité interne évaluant l'homogénéité de couleur sur la surface de chaque comprimé pris individuellement ;
et un indice de variabilité externe d'une couleur desdits comprimés (100, 101) sélectionnés selon la formule :

$$\overline{\overline{\Delta E}}_{2000}^{ext} = \frac{1}{N} \Sigma_{j=1}^{N} \overrightarrow{\Delta E}_{2000j}^{ext} \ [\text{éq. 5}]$$

où :

$\overrightarrow{\Delta E}_{2000}^{ext}$ est le vecteur des distances de couleur externe associées au *j-ème* comprimé dans l'espace colorimétrique CIELAB, ledit indice de variabilité externe évaluant la diversité de couleur parmi une pluralité de comprimés.

5. Enrobeuse continue (50) pour enrober des comprimés, dotée d'un système (1) d'analyse de l'enrobage de comprimés (100, 101) selon l'une quelconque des revendications précédentes.

6. Enrobeuse continue (50) selon la revendication 5, comprenant une unité de traitement (60) connectée à l'unité de commande (10) dudit système (1) et conçue pour faire varier des paramètres de fonctionnement de traitement de ladite enrobeuse (50) sur la base d'informations fournies par ladite unité de commande (10) concernant une uniformité de couleur de surfaces externes des comprimés enrobés.

7. Procédé d'analyse d'enrobage de comprimés, pilules, gélules ou similaires pour une utilisation pharmaceutique et/ou alimentaire traités par une enrobeuse (50) pour comprimés dotée d'une goulotte de sortie (51) pour la distribution de comprimés enrobés (100, 101), comprenant :

- l'éclairage à l'aide d'un éclairage en dôme (2) d'une zone de détection (B) d'un plan descendant (52) de ladite goulotte de sortie (51) sur laquelle lesdits comprimés (100, 101) descendent par gravité le long d'une direction de sortie (A) ;
- la détection, au moyen de moyens de vision (3) associés audit éclairage en dôme (2), d'images desdits comprimés (100, 101) se déplaçant le long dudit plan descendant (52) ;
- au moyen d'une unité de commande (10), connectée auxdits moyens de vision (3) afin de recevoir des images desdits comprimés (100, 101), le suivi d'un mouvement desdits comprimés (100, 101) et l'analyse uniquement des images de comprimés sélectionnés sans ombres ;
- l'évaluation d'une uniformité de couleur de surfaces externes desdits comprimés sélectionnés.

8. Procédé selon la revendication 7, dans lequel lesdits comprimés sélectionnés sans ombres comprennent des comprimés individuels et distincts qui exposent une surface d'extension maximale de ceux-ci à des moyens de vision (3).

9. Procédé selon la revendication 7 ou 8, comprenant la détection desdites images desdits comprimés (100, 101) par des moyens de vision (3) comprenant une caméra.

10. Procédé selon l'une quelconque des revendications 7 à 9, dans lequel ladite évaluation de ladite uniformité de couleur d'une surface externe desdits comprimés (100, 101) sélectionnés comprend la mesure d'un indice de variabilité interne d'une couleur de N comprimés (100, 101) sélectionnés selon la formule :

$$\overline{\overline{\Delta E}}_{2000}^{int} = \frac{1}{N} \Sigma_{j=1}^{N} \overline{\Delta E}_{2000j}^{int} \text{ [éq. 3]}$$

où :

$\overline{\Delta E}_{2000j}^{int}$ est la distance moyenne de couleur interne associée au *j-ème* comprimé dans l'espace colorimétrique CIELAB, ledit indice de variabilité interne évaluant l'homogénéité de couleur sur la surface de chaque comprimé pris individuellement ;
et un indice de variabilité externe d'une couleur desdits comprimés (100, 101) sélectionnés selon la formule respective

$$\overline{\overline{\Delta E}}_{2000}^{ext} = \frac{1}{N} \Sigma_{j=1}^{N} \overrightarrow{\Delta E}_{2000j}^{ext} \text{ [éq. 5]}$$

où :

$\overrightarrow{\Delta E}_{2000}^{ext}$ est le vecteur des distances de couleur externe associées au *j-ème* comprimé dans l'espace colorimétrique CIELAB, ledit indice de variabilité externe évaluant la diversité de couleur parmi une pluralité de comprimés.

**Fig. 1**

**Fig. 2**

Fig. 3

Fig. 4

Fig. 5a

Fig. 5b

Fig.6a

101

Fig.6b

## REFERENCES CITED IN THE DESCRIPTION

**Non-patent literature cited in the description**

- **M. A. MURILLO et al.** Color evolution during a coating process of pharmaceutical tablet cores by random spraying. *Color Research & Application*, 28 November 2018, vol. 44 (2), 160-167
- **G. PODREKAR et al.** Automated visual inspection of pharmaceutical tablets in heavily cluttered dynamic environments. *Proceedings of the 14th IAPR International Conference on Machine Vision Applications*, 18 May 2015, 206-209
- **R. E. KALMAN**. A New Approach to Linear Filtering and Prediction Problems. *Journal of Basic Engineering*, 1960, vol. 82 (1), 35-45
- **P. JACCARD**. The distribution of the flora in the alpine zone. *New phytologist*, 1912, vol. 11 (2), 37-50

- **H. W. KUHN**. The Hungarian method for the assignment problem. *Naval Research Logistics Quarterly*, 1955, vol. 2 (1-2), 83-97
- **J. O'ROURKE**. Finding minimal enclosing boxes. *International journal of computer & information sciences*, 1985, vol. 14 (3), 183-199
- **J. CANNY**. A Computational Approach To Edge Detection. *IEEE Transactions on Pattern Analysis and Machine Intelligence*, 1986, vol. 8 (6), 679-698
- **WIEN**. Improvement to industrial colour-difference evaluation. Central Bureau of the CIE, 2001